# EUROPEAN PATENT SPECIFICATION

(11) **EP 2 974 202 B1**
(45) Date of publication and mention of the grant of the patent: **02.12.2020**
(21) Application number: 14709451.0
(22) Date of filing: 12.02.2014
(51) Int. Cl.: H04L 29/06, H04L 29/08

(54) **IDENTIFICATION OF ORIGINATING IP ADDRESS AND CLIENT PORT CONNECTION**
IDENTIFIKATION VON URSPRUNGS-IP-ADRESSEN UND CLIENT-PORTVERBINDUNGEN
IDENTIFICATION DE L'ADRESSE IP ÉMETTRICE ET D'UNE CONNEXION DE PORT CLIENT

(30) Priority: 11.03.2013 US 201313793373
(43) Date of publication of application: 20.01.2016
(73) Proprietor: Cisco Technology, Inc., San Jose, CA 95134-1706 (US)
(72) Inventor: LI, Ke, Hangzhou, Zhejiang 310012 (CN)
(74) Representative: Mathys & Squire
(86) International application number: PCT/US2014/016110
(87) International publication number: WO 2014/163774

(56) References cited:
- US-A1- 2005 144 290
- E Abdo: "HOST_ID TCP Options: Implementation & Preliminary Test Results", , 16 July 2012 (2012-07-16), XP055121961, Retrieved from the Internet: URL:http://tools.ietf.org/pdf/draft-abdo-h ostid-tcpopt-implementation-03.pdf [retrieved on 2014-06-05]
- BOUCADAIR FRANCE TELECOM J TOUCH USC/ISI P LEVIS FRANCE TELECOM R PENNO CISCO M: "Analysis of Solution Candidates to Reveal a Host Identifier (HOST_ID) in Shared Address Deployments; draft-ietf-intarea-nat-reveal-analysis-05. txt", ANALYSIS OF SOLUTION CANDIDATES TO REVEAL A HOST IDENTIFIER (HOST_ID) IN SHARED ADDRESS DEPLOYMENTS; DRAFT-IETF-INTAREA-NAT-REVEAL-ANALYSIS-05. TXT, INTERNET ENGINEERING TASK FORCE, IETF; STANDARDWORKINGDRAFT, INTERNET SOCIETY (ISOC) 4, RUE DES FALAIS, 14 February 2013 (2013-02-14), pages 1-22, XP015090001, [retrieved on 2013-02-14]
- YOURTCHENKO D WING CISCO A: "Revealing hosts sharing an IP address using TCP option; draft-wing-nat-reveal-option-03.txt", REVEALING HOSTS SHARING AN IP ADDRESS USING TCP OPTION; DRAFT-WING-NAT-REVEAL-OPTION-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 December 2011 (2011-12-08), pages 1-10, XP015079695, [retrieved on 2011-12-08]

## Description

### TECHNICAL FIELD

This disclosure relates generally to connection of a client to a web server via a proxy server and, more particularly, to techniques for identifying an originating IP address and port connection of a client connected to the web server via a proxy server.

### BACKGROUND

A load balancer, or proxy server, is often deployed between clients of a web-based service and a plurality of web servers for providing the service in order to balance the workload among the servers. In one example, the load balancer may listen on the port where external clients connect to access the service. The load balancer may then forward the request to one of the backend servers, which may reply directly to the load balancer, allowing the load balancer to reply to the client without the client even knowing of its existence.

Another effect of using a proxy server/load balancer is that the actual client address is hidden from the web server; the IP address of the proxy server/load balancer is provided as the originating address to the web server, effectively making the proxy server/load balancer an anonymizing service. This makes detection and prevention of abusive client accesses more difficult than if the IP address of the client were provided to the web server as the originating address. Currently, the X-Forwarded-For ("XFF") HTTP header field may be used to identify the originating IP address of a client connected to a web server through an HTTP proxy server or load balancer. The usefulness of XFF depends on the proxy server truthfully reporting the original host's IP address. As a result, effective use of XFF requires knowledge of the trustworthiness of proxy servers, for example, as indicated in a whitelist of servers whose maintainers can be trusted. Moreover, because XFF is an HTTP header field, it is only useful in connection with HTTP proxy servers/load balancers.

An Internet Draft publication <draft-abdo-hostid-tcpopt-implementation-03 >, also entitled HOST_ID TCP Options: Implementation & Preliminary Test Results, by E. Abdo et al, which is available through the IETF discloses the implementation of HOST_ID TCP Options.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a block diagram of a data communications environment in which an embodiment for identifying to a web server an originating IP address and port connection of a client connected to the web server via a proxy server may be implemented;
FIGURE 2 illustrates a Transmission Control Protocol ("TCP") segment including an X-Forwarded Source ("XFS") element for identifying to a web server an originating IP address and port connection of a client connected to the web server via a proxy server in accordance with an embodiment;
FIGURE 3 illustrates messages exchanged during a three-way handshake for initiating a TCP connection used in connection with identifying to a web server an originating IP address and port connection of a client connected to the web server via a proxy server in accordance with an embodiment;
FIGURE 4 illustrates a flowchart of a technique implemented by a proxy server for performing a TCP three-way handshake used in connection with identifying to a web server an originating IP address and port connection of a client connected to the web server via the proxy server in accordance with an embodiment;
FIGURE 5 illustrates a flowchart of a technique implemented by a web server for performing a TCP three-way handshake used in connection with identifying to the web server an originating IP address and port connection of a client connected to the web server via a proxy server in accordance with an embodiment; and
FIGURE 6 is a more detailed block diagram of a proxy server and a web server for use in identifying to the web server an originating IP address and port connection of a client connected to the web server via the proxy server in accordance with an embodiment.

### DETAILED DESCRIPTION OF EXAMPLE EMBODIMENTS

### OVERVIEW

The invention is defined by claims 1 and 6.

A method is provided in one example embodiment and includes receiving a message from a client destined for a server; embedding in the received message an X-Forwarded Source ("XFS") value identifying the client; and forwarding the received message comprising the embedded XFS value to the server. In one embodiment, the message is an acknowledge ("ACK") message of a Transmission Control Protocol ("TCP") three-way handshake. The XFS value may include at least one of a source IP address of the client and a source port designator associated with the client. The received message may be sent in response to a Transmission Control Protocol ("TCP") Synchronize-Acknowledge ("SYN-ACK") message received by the client from the server. Additionally, the XFS value may be embedded in a Transmission Control Protocol ("TCP") header of the message.

### EXAMPLE EMBODIMENTS

The following discussion references various embodiments. However, it should be understood that the disclosure is not limited to specifically described embodiments. Instead, any combination of the following features and elements, whether related to different embodiments or not, is contemplated to implement and practice the disclosure. Furthermore, although embodiments may achieve advantages over other possible solutions and/or over the prior art, whether or not a particular advantage is achieved by a given embodiment is not limiting of the disclosure. Thus, the following aspects, features, embodiments and advantages are merely illustrative and are not considered elements or limitations of the appended claims except where explicitly recited in a claim(s). Likewise, reference to "the disclosure" shall not be construed as a generalization of any subject matter disclosed herein and shall not be considered to be an element or limitation of the appended claims except where explicitly recited in a claim(s).

As will be appreciated, aspects of the present disclosure may be embodied as a system, method, or computer program product. Accordingly, aspects of the present disclosure may take the form of an entirely hardware embodiment, an entirely software embodiment (including firmware, resident software, micro-code, *etc*.), or an embodiment combining software and hardware aspects that may generally be referred to herein as a "module" or "system." Furthermore, aspects of the present disclosure may take the form of a computer program product embodied in one or more non-transitory computer readable medium(s) having computer readable program code encoded thereon.

Any combination of one or more non-transitory computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory ("RAM"), a read-only memory ("ROM"), an erasable programmable read-only memory ("EPROM" or "Flash memory"), an optical fiber, a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus or device.

Computer program code for carrying out operations for aspects of the present disclosure may be written in any combination of one or more programming languages, including an object oriented programming language such as Java™, Smalltalk™, C++ or the like and conventional procedural programming languages, such as the "C" programming language or similar programming languages.

Aspects of the present disclosure are described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality and operation of possible implementations of systems, methods and computer program products according to various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in a different order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

As will be described in detail below, in one embodiment, an approach is presented for identifying the originating IP address and client port connection to a web server via a proxy server. To this end, and as described in detail below, an X-Forwarded Source ("XFS") value comprising the originating IP address and source port of the client is embedded by the proxy server in the TCP header of the ACK message from the client to the server during initiation of a TCP connection. In this manner, the web server is provided with the originating IP address and source port of the client.

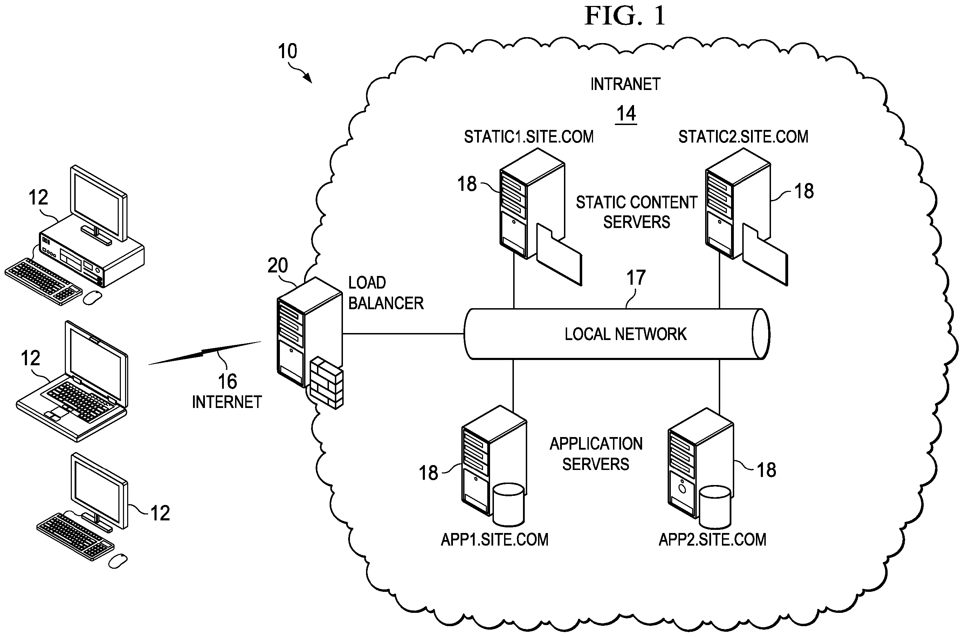

Referring now to FIGURE 1, illustrated therein is a system 10 comprising a plurality of network devices for implementing features of the present disclosure. As shown in FIGURE 1, system 10 may include one or more end user terminals ("EUTs") 12 through which a user may access an intranet 14 via an Internet connection 16. Intranet 14 may be configured to function as a web site for providing Internet-based services to EUTs 12, each of which may include a web client for interacting with intranet 14. EUTs 12 are clients that are inclusive of devices used to initiate a communication, such as a computer, a personal digital assistant (PDA), a laptop or electronic notebook, a cellular telephone, an IP telephone, an iPhone™, an iPad™, a Microsoft Surface™, a Google Nexus™, or any other device, component, element, or object capable of initiating voice, audio, or data exchanges within system 10. EUTs 12 may also be inclusive of a suitable interface to a user, such as a microphone, a display, or a keyboard or other terminal equipment. EUTs 12 may also include any device that seeks to initiate a communication on behalf of another entity or element, such as a program, a database, or any other component, device, element, or object capable of initiating a voice or a data exchange within system 10. In addition, each of EUTs 12 may be a unique element designed specifically for communications involving system 10.

In one embodiment, intranet 14 includes a plurality of web servers 18 interconnected via a local network 17 and accessible by EUTs 12 via a proxy server 20. Vis-à-vis EUTs 12, web servers 18 are located "behind" proxy server 20. Proxy server 20 may perform load-balancing applications with respect to system 10 in order to distribute the workload generated by EUTs 12 across the multiple servers 18 to achieve optimal resource utilization and throughput, minimize response time, and avoid overloading any one or more of the servers. In general, employing load balancing techniques while providing multiple web servers increases system reliability through redundancy. In one embodiment, proxy server 20 is dedicated to performing load balancing for system 10 and particularly intranet 14.

TCP is a core protocol of the Internet Protocol ("IP") suite, also referred to as the TCP/IP suite. TCP provides reliable, ordered delivery of a stream of octets from an application running on one computer to another application running on another computer. TCP corresponds to the transport layer of the TCP/IP suite and provides communications services at an intermediate level between an application and IP. In particular, when a program wants to send a large portion of data across the Internet using IP, the application can issue a single request to TCP, which in turn handles the IP details (i.e., breaking the data down into IP packets and issuing a corresponding number of IP requests). An IP packet is a sequence of octets and includes a header, which identifies the packet's destination, and a body, which is the data being transmitted. Due to various network issues, IP packets can be lost, duplicated, or delivered out of order. A TCP receiver at the recipient may detect and ameliorate such issues, such as by requesting retransmission of lost packets, deleting duplicate packets, and rearranging out-of-order packets. Once the TCP receiver has reassembled the sequence of octets originally transmitted, it passes them to the application. In this manner, TCP abstracts the application's communication from the underlying network details.

TCP guarantees that all bytes received will be identical to and in the same order as those originally sent. A technique referred to as positive acknowledgment with retransmission is used to guarantee the reliability of TCP packet transfers by requiring the receiver to respond with an acknowledgment message as it receives the data. On the other end, the sender maintains a record of each packet it sends, as well as a corresponding timer that tracks the amount of time that has elapsed since the packet has been sent. If the timer expires before an acknowledgement is received, the packet is retransmitted.

As previously noted, while IP handles the actual delivery of packets, TCP keeps track of the individual units (or "segments") of data into which a message is divided for efficient routing and transport through the network. For example, when a file is sent by an application executing on a server, the TCP software layer of the server divides the sequence of octets comprising the file into segments and then forwards them individually to the IP software layer. The IP software layer encapsulates each TCP segment into an IP packet by adding a header that includes, among other items, the destination IP address. Upon receipt of an IP packet at the destination, the TCP layer of the destination application ensures that the segments are error free and assembled in the correct order before sending them to the application.

In operation, TCP receives data from a data stream, divides it into segments, and adds a TCP header, thereby creating a TCP segment consisting of a "header" section and a "data" section. The TCP header includes ten mandatory fields and an optional extension field. The data section following the header includes the payload data for the application. The TCP segment is encapsulated into an IP datagram.

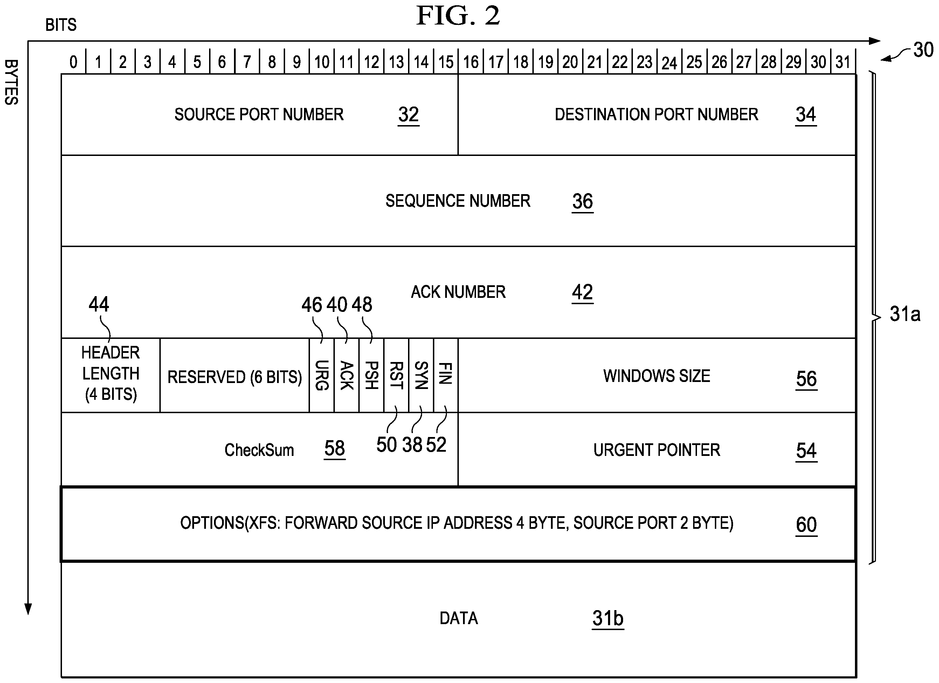

FIGURE 2 illustrates a Transmission Control Protocol ("TCP") segment 30 including an X-Forwarded Source ("XFS") element for identifying to a web server an originating IP address and port connection of a client connected to the web server via a proxy server in accordance with an embodiment. As shown in FIGURE 2, the segment 30 may include a TCP header portion 31a and a data portion 31b. The segment may further include a Source Port Number field 32, which comprises a 16-bit number that identifies the sending port, and a Destination Port Number field 34, which comprises a 16-bit number that identifies the destination port. A Sequence Number field 36, comprising a 32-bit number corresponding to an "initial sequence number" or an "accumulated sequence number," depending on whether a SYN flag 38 is set (1) or clear (0), may also be provided. If the SYN flag 38 is set, then the value in the Sequence Number field 36 is the initial sequence number and the sequence number of the first data byte and the number in the corresponding ACK are the value in the Sequence Number field plus 1. If the SYN flag 38 is clear, then the value in the Sequence Number field 36 is the accumulated sequence number of the first data byte of the segment for the current session.

Continuing with reference to FIGURE 2, if an ACK flag 40 is set, then a value contained in an ACK Number field 42 is the next sequence number that the receiver is expecting, acknowledging receipt of all prior bytes. The first ACK sent by each end acknowledges the initial sequence number of (but no data from) the other end. A Header Length field 44 indicates the size of the TCP header in 32-bit words. The size of the header is 5 to 15 words, or 20 to 60 bytes. In addition to the ACK flag 40 and SYN flag 38, described above, the TCP header also includes an URG flag 46, a PSH flag 48, a RST flag 50, and a FIN flag 52. If the URG flag 46 is set, then a value in an Urgent Pointer field 54 is significant; if the URG flag is clear, the value in the Urgent Pointer field is not significant. The Urgent Pointer field 54 contains a 16-bit value indicating an offset from the sequence number indicating the last urgent data byte.

If the ACK flag 40 is set, then the value in the ACK Number field 42 is significant; all packets after the initial SYN packet sent by the client should therefore have the ACK flag set. The PSH flag 48 being set indicates that buffered data should be pushed to the receiving application. The RST flag 50 being set resets the connection. The FIN flag 52 being set indicates that there is no more data from the sender. It should be noticed that only the first packet sent from each end should have the SYN flag 38 set.

A Window Size field 56 contains a 16-bit value indicating the size of the receive window, which specifies the number of window size units (e.g., in bytes), beyond the sequence number in the acknowledgement field, that the sender of this segment is currently willing to receive. A Checksum field 58 contains a 16-bit value used for error checking the header and data. The length of an Options field 60 is determined by the value contained in the Header Length field 44. Each option in Options field 60 includes up to three fields, including a mandatory 1-byte "Option-Kind" field, an optional 1 byte "Option-Length" field, and an optional variable length "Option-Data" field. The Option-Kind field indicates the type of option, and is the only field that is not optional; the kind of option indicated in the Option-Kind field determines whether the remaining two fields may be set. The Option-Length field indicates the total length of the option, while the Option-Data field contains the value of the option, if applicable. Padding with zeros may be used to ensure that the TCP header ends and data begins on a 32-bit boundary.

In accordance with features of one embodiment, and as will be described in greater detail below, an XFS for the connection may be included in Options field 60. The XFS may comprise a 4-byte Source IP designator and a 2-byte Source Port designator. As will be described in detail below, the XFS is saved in Options field 60 of the ACK segment by the proxy server during the three-way handshake conducted between the client and server during initialization of a TCP connection therebetween.

TCP uses a three-way handshake to establish a connection between two network elements. In general, before a client attempts to establish a connection with a server, the server will perform a "passive open," in which the server binds to and listens at a port to open it for connections. Next, the client may initiate an "active open" via a three-way handshake. First, the client sends a Synchronize ("SYN") message to the server, in which the client sets the TCP segment's sequence number to a random value *X.* The server responds to the SYN message with a Synchronize-Acknowledge ("SYN-ACK") message, in which the acknowledgement number is set to one more than the received sequence number; in this case, *N+1*. Additionally, the server chooses another random number to serve as the sequence number for the packet (e.g., *Y*). In response to receipt of the SYN-ACK message, the client sends an Acknowledge ("ACK") message to the server, in which the sequence number is set to the received acknowledgement value (*X*+*1*) and the acknowledgement number is set to one more than the received sequence number (*Y*+*1*)*.* At this point, both the client and the server have acknowledged and received acknowledgement of the connection. In this manner, full duplex communication is established between the client and server.

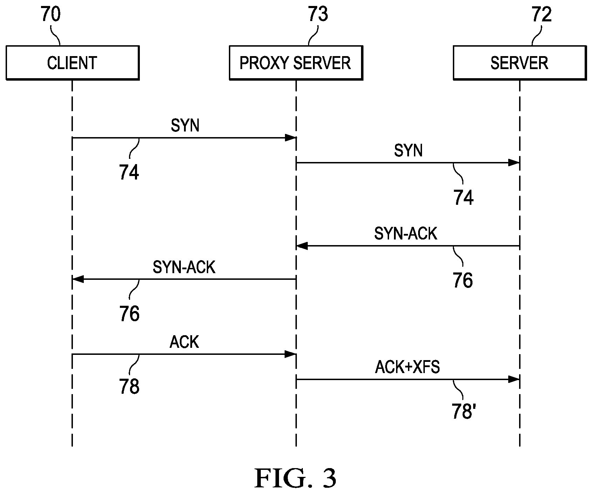

Referring to FIGURE 3, in operation, when a client 70 attempts to open a TCP connection to a server 72, the client and server exchange a series of messages via a proxy server 73 as illustrated in FIGURE 3. As shown in FIGURE 3, the client 70 requests a connection to the server 72 by sending a SYN message 74 to the server via the proxy server 73. The server 72 responds to and acknowledges the received request by sending a SYN-ACK message 76 to the client 70 via the proxy server 73. The client 70 responds to the SYN-ACK message with an ACK message 78 of its own. It will be recognized that, in accordance with embodiments described herein, the proxy server 73 embeds the XFS in the TCP segment of the ACK message it forwards to the server 72, creating an ACK message 78'. Once the ACK message 78' is received by the server 72, the connection is established.

It will be noted that, although the XFS could be embedded in the TCP segment of the SYN message, because there is no need for the server to know the address of the client if the three-way handshake is unsuccessful, it is more efficient to embed the XFS in the TCP segment of the ACK message. Additionally, embedding it in the ACK message avoids the problem of servers using SYN cookies to avoid SYN attacks by not saving SYN package information.

The XFS is advantageously embedded in the in the handshake package, as described above, as opposed to other communications packages, because upon handshaking success, the kernel will assume the socket is a connecting success. As a result, the XFS information is saved only once, thereby reducing network cost and overhead. Moreover, even if the data is lost during communication, the kernel will retain the actual client, and not the proxy server, address.

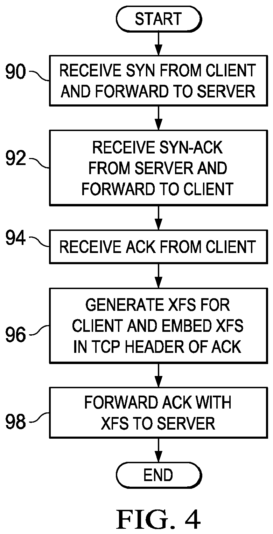

FIGURE 4 illustrates a flowchart of a technique implemented by a proxy server for performing a TCP three-way handshake used in connection with identifying to a web server an originating IP address and port connection of a client connected to the web server via the proxy server in accordance with an embodiment. As shown in FIGURE 4, in step 90, the proxy server receives a SYN message from the client and forwards it to the server. In step 92, the proxy server receives a SYN-ACK message from the server and forwards it to the client. In step 94, the proxy server receives an ACK message from the client. In step 96, the proxy server creates an XFS for the client, which in one embodiment may include a 4-byte Source IP designator and a 2-byte Source Port designator. The proxy server embeds the XFS for the client in the Options field of the TCP header of the ACK received from the client. In step 98, the proxy server forwards the ACK with the embedded XFS value to the server.

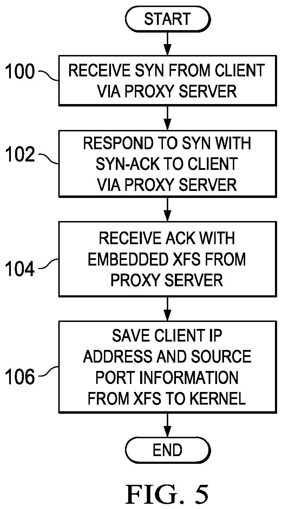

FIGURE 5 illustrates a flowchart of a technique implemented by a web server for performing a TCP three-way handshake used in connection with identifying to the web server an originating IP address and port connection of a client connected to the web server via a proxy server in accordance with an embodiment. As shown in FIGURE 5, in step 100, the server receives a SYN message from the client via the proxy server. In step 102, the server responds to the SYN message with a SYN-ACK message, which is sent to the client via the proxy server. In step 104, the server receives the ACK message with the embedded XFS value from the proxy server. In step 106, the server saves the source IP address and source port information included in the embedded XFS. This information may be saved to the kernel of the server.

In one example implementation, various devices involved in implementing the embodiments described herein can include software for achieving the described functions. For example, referring to FIGURE 5, each of the routers of the embodiments described herein, represented in FIGURE 5 by a router 130, may include a pruning module 132, which comprises software embodied in one or more tangible media for facilitating the activities described herein. The router 130 may also include a memory device 134 for storing information to be used in achieving the functions as outlined herein. Additionally, the router 130 may include a processor 136 that is capable of executing software or an algorithm (such as embodied in module 132) to perform the functions as discussed in this Specification.

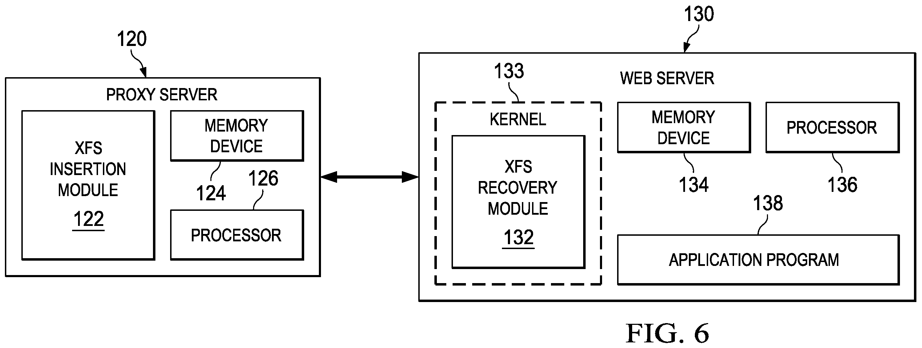

FIGURE 6 is a more detailed block diagram of a proxy server and a web server for use in identifying to the web server an originating IP address and port connection of a client connected to the web server via the proxy server in accordance with an embodiment. As shown in FIGURE 6, in one embodiment a proxy server 120 may include an XFS insertion module 122, which comprises which comprises software embodied in one or more tangible media for facilitating the activities described herein. Proxy server 120 may also include a memory device 124 for storing information to be used in achieving the functions as outlined herein. Additionally, proxy server 120 may include a processor 126 that is capable of executing software or an algorithm (such as embodied in module 122) to perform the functions as discussed in this Specification. Similarly, a web server 130 may include an XFS recovery module 132, which comprises which comprises software embodied in one or more tangible media for facilitating the activities described herein. Module 132 may reside in a kernel 133 of web server 130. The web server 130 may also include a memory device 134 for storing information to be used in achieving the functions as outlined herein. Additionally, the web server 130 may include a processor 136 that is capable of executing software or an algorithm (such as embodied in module 132) to perform the functions as discussed in this Specification. One or more application programs, represented in FIGURE 6 by an application program 138, executing on web server 130 may access the source IP and port identification information recovered by module 132 and stored on web server 130 (e.g., in kernel 133) for use in performing various operations as necessary, advantageous, and/or desirable.

It should be noted that in architectures that involve multiple layers of proxy servers/load balancers, the XFS is embedded into the TCP header of the ACK by the first one of the proxy servers that encounters the ACK; the TCP header is thereafter maintained by the remaining proxy servers for use by the destination web server as described above.

It should also be noted that much of the infrastructure discussed herein can be provisioned as part of any type of network device. As used herein, the term "network device" can encompass computers, servers, network appliances, hosts, routers, switches, gateways, bridges, virtual equipment, load-balancers, firewalls, processors, modules, or any other suitable device, component, element, or object operable to exchange information in a communications environment. Moreover, the network devices may include any suitable hardware, software, components, modules, interfaces, or objects that facilitate the operations thereof. This may be inclusive of appropriate algorithms and communication protocols that allow for the effective exchange of data or information.

In one implementation, these devices can include software to achieve (or to foster) the activities discussed herein. This could include the implementation of instances of any of the components, engines, logic, modules, etc., shown in the FIGURES. Additionally, each of these devices can have an internal structure (e.g., a processor, a memory element, etc.) to facilitate some of the operations described herein. In other embodiments, the activities may be executed externally to these devices, or included in some other device to achieve the intended functionality. Alternatively, these devices may include software (or reciprocating software) that can coordinate with other elements in order to perform the activities described herein. In still other embodiments, one or several devices may include any suitable algorithms, hardware, software, components, modules, interfaces, or objects that facilitate the operations thereof.

Note that in certain example implementations, functions outlined herein may be implemented by logic encoded in one or more non-transitory, tangible media (e.g., embedded logic provided in an application specific integrated circuit ("ASIC"), digital signal processor ("DSP") instructions, software (potentially inclusive of object code and source code) to be executed by a processor, or other similar machine, etc.). In some of these instances, a memory element, as may be inherent in several devices illustrated in the FIGURES, can store data used for the operations described herein. This includes the memory element being able to store software, logic, code, or processor instructions that are executed to carry out the activities described in this Specification. A processor can execute any type of instructions associated with the data to achieve the operations detailed herein in this Specification. In one example, the processor, as may be inherent in several devices illustrated herein, could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array ("FPGA"), an erasable programmable read only memory ("EPROM"), an electrically erasable programmable ROM ("EEPROM")) or an ASIC that includes digital logic, software, code, electronic instructions, or any suitable combination thereof.

The devices illustrated herein may maintain information in any suitable memory element (random access memory ("RAM"), ROM, EPROM, EEPROM, ASIC, etc.), software, hardware, or in any other suitable component, device, element, or object where appropriate and based on particular needs. Any of the memory items discussed herein should be construed as being encompassed within the broad term "memory element." Similarly, any of the potential processing elements, modules, and machines described in this Specification should be construed as being encompassed within the broad term "processor." Each of the computer elements can also include suitable interfaces for receiving, transmitting, and/or otherwise communicating data or information in a communications environment.

Note that with the example provided above, as well as numerous other examples provided herein, interaction may be described in terms of two, three, or four computer elements. However, this has been done for purposes of clarity and example only. In certain cases, it may be easier to describe one or more of the functionalities of a given set of flows by only referencing a limited number of system elements. It should be appreciated that systems illustrated in the FIGURES (and their teachings) are readily scalable and can accommodate a large number of components, as well as more complicated/sophisticated arrangements and configurations. Accordingly, the examples provided should not limit the scope or inhibit the broad teachings of illustrated systems as potentially applied to a myriad of other architectures.

It is also important to note that the steps in the preceding flow diagrams illustrate only some of the possible signaling scenarios and patterns that may be executed by, or within, the illustrated systems. Some of these steps may be deleted or removed where appropriate, or these steps may be modified or changed considerably without departing from the scope of the present disclosure. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by the illustrated systems in that any suitable arrangements, chronologies, configurations, and timing mechanisms may be provided without departing from the teachings of the present disclosure. Although the present disclosure has been described in detail with reference to particular arrangements and configurations, these example configurations and arrangements may be changed significantly without departing from the scope of the present disclosure.

Numerous other changes, substitutions, variations, alterations, and modifications may be ascertained to one skilled in the art and it is intended that the present disclosure encompass such changes, substitutions, variations, alterations, and modifications as falling within the scope of the appended claims.

## Claims

1. A method, comprising:
receiving (94), by a load balancing Transmission Control Protocol, TCP, proxy server, a message from a client destined for a web server;
embedding (96), by the load balancing TCP proxy server, in the received message an X-Forwarded Source, XFS, value identifying the client, wherein the XFS value includes at least one of a source IP address of the client and a source port designator associated with the client;
forwarding (98), by the load balancing TCP proxy server, the received message comprising the embedded XFS value to the web server;
receiving (104), by the web server, the message including the embedded XFS value;
recovering, by the web server, the XFS value from the received message; and
storing (106) the recovered XFS value in a kernel of the web server for use by an application program executing on the web server.

2. The method of Claim 1, wherein the message is an acknowledge, ACK, message of a TCP three-way handshake.

3. The method of Claim 1, wherein the received message is sent in response to a TCP Synchronize-Acknowledge, SYN-ACK, message received by the client from the web server.

4. The method of Claim 1, wherein the XFS value is embedded in a TCP header of the message.

5. A computer readable medium including executable instructions which, when executed in a processing system, cause the processing system to perform all the steps of a method according to any one of the preceding claims.

6. A system comprising:
a load balancing Transmission Control Protocol, TCP, proxy server (120) having a memory element (124) configured to store data, a processor (126) operable to execute instructions associated with the data, and a XFS module (122) configured to:
receive a message from a client destined for a web server;
embed, in the received message, an X-Forwarded Source, XFS, value identifying the client, wherein the XFS value includes at least one of a source IP address of the client and a source port designator associated with the client; and
forward the received message comprising the embedded XFS value to the web server; and
a web server (130) configured to:
receive the message including the embedded XFS value;
recover the XFS value from the received message; and
store the recovered XFS value in a kernel of the web server for use by an application program executing on the web server.

7. The system of Claim 6, wherein the message is an acknowledge, ACK, message of a TCP three-way handshake.

8. The system of Claim 6, wherein the received message is sent in response to a TCP Synchronize-Acknowledge, SYN-ACK, message received by the client from the web server.

9. The system of Claim 6, wherein the XFS value is embedded in a TCP header of the message.

## Patentansprüche

1. Verfahren, das Folgendes beinhaltet:
Empfangen (94), durch einen lastausgleichenden TCP-(Transmission Control Protocol)-Proxy-Server, einer Nachricht von einem Client, die für einen Web-Server bestimmt ist;
Einbetten (96), durch den lastausgleichenden TCP-Proxy-Server, eines den Client identifizierenden XFS-(XForwarded Source)-Wertes in die empfangene Nachricht, wobei der XFS-Wert mindestens eine Quell-IP-Adresse des Clients und/oder einen mit dem Client assoziierten Quellportbezeichner enthält;
Weiterleiten (98), durch den lastausgleichenden TCP-Proxy-Server, der den eingebetteten XFS-Wert enthaltenden empfangenen Nachricht an den Web-Server;
Empfangen (104), durch den Webserver, der den eingebetteten XFS-Wert enthaltenden Nachricht;
Wiederherstellen, durch den Web-Server, des XFS-Wertes aus der empfangenen Nachricht; und
Speichern (106) des wiederhergestellten XFS-Wertes in einem Kernel des Webservers zur Verwendung durch ein auf dem Webserver ausgeführtes Anwendungsprogramm.

2. Verfahren nach Anspruch 1, wobei die Nachricht eine ACK-(Acknowledge)-Nachricht eines TCP-Dreiwege-Handshakes ist.

3. Verfahren nach Anspruch 1, wobei die empfangene Nachricht als Antwort auf eine TCP SYN-ACK-(Synchronize-Acknowledge)-Nachricht gesendet wird, die der Client vom Webserver empfangen hat.

4. Verfahren nach Anspruch 1, wobei der XFS-Wert in einen TCP-Header der Nachricht eingebettet wird.

5. Computerlesbares Medium mit ausführbaren Befehlen, die bei Ausführung in einem Verarbeitungssystem bewirken, dass das Verarbeitungssystem alle Schritte eines Verfahrens nach einem der vorherigen Ansprüche durchführt.

6. System, das Folgendes umfasst:
einen lastausgleichenden TCP-(Transmission Control Protocol)-Proxy-Server (120) mit einem Speicherelement (124), das zum Speichern von Daten konfiguriert ist, einem Prozessor (126) mit der Aufgabe, mit den Daten assoziierte Befehle auszuführen, und einem XFS-Modul (122), konfiguriert zum:
Empfangen einer für einen Web-Server bestimmten Nachricht von einem Client;
Einbetten, in die empfangene Nachricht, eines den Client identifizierenden XFS-(X-Forwarded Source)-Wertes, wobei der XFS-Wert eine Quell-IP-Adresse des Clients und/oder einen mit dem Client assoziierten Quellportbezeichner enthält; und
Weiterleiten der den eingebetteten XFS-Wert enthaltenden empfangenen Nachricht an den Web-Server; und
einen Web-Server (130), konfiguriert zum:
Empfangen der den eingebetteten XFS-Wert enthaltenden Nachricht;
Wiederherstellen des XFS-Wertes aus der empfangenen Nachricht; und
Speichern des wiederhergestellten XFS-Wertes in einem Kernel des Webservers zur Verwendung durch ein auf dem Webserver ausgeführtes Anwendungsprogramm.

7. System nach Anspruch 6, wobei die Nachricht eine ACK-(Acknowledge)-Nachricht eines TCP-Dreiwege-Handshakes ist.

8. System nach Anspruch 6, wobei die empfangene Nachricht als Antwort auf eine TCP SYN-ACK-(Synchronize-Acknowledge)-Nachricht gesendet wird, die der Client vom Web-Server empfängt.

9. System nach Anspruch 6, wobei der XFS-Wert in einen TCP-Header der Nachricht eingebettet ist.

## Revendications

1. Procédé, comprenant:
la réception (94), par un serveur mandataire à protocole de commande de transmission, TCP, d'équilibrage de charge, depuis un client d'un message destiné à un serveur Web;
l'incorporation (96), par le serveur mandataire TCP d'équilibrage de charge, dans le message reçu d'une valeur réacheminée vers X, XFS, identifiant le client, la valeur XFS comportant au moins un d'une adresse IP source du client et d'un désignateur de port source associé au client;
l'acheminement (98), par le serveur mandataire TCP d'équilibrage de charge, du message reçu comprenant la valeur XFS incorporée jusqu'au serveur Web;
la réception (104), par le serveur Web, du message comportant la valeur XFS incorporée;
la récupération, par le serveur Web, de la valeur XFS à partir du message reçu; et
le stockage (106) de la valeur XFS récupérée dans un noyau du serveur Web en vue de son utilisation par le programme d'application exécuté sur le serveur Web.

2. Procédé selon la revendication 1, dans lequel le message est un message d'accusé de réception, ACK, d'un établissement de liaison à trois voies du TCP.

3. Procédé selon la revendication 1, dans lequel le message reçu est envoyé en réponse à un message de synchronisation-accusé de réception, SYN-ACK, du TCP reçu par le client à partir du serveur.

4. Procédé selon la revendication 1, dans lequel la valeur XFS est incorporée dans un en-tête de TCP du message.

5. Support lisible par ordinateur comportant des instructions exécutables qui, à leur exécution dans un système de traitement, amènent le système de traitement à réaliser toutes les étapes d'un procédé selon l'une quelconque des revendications précédentes.

6. Système comprenant:
un serveur mandataire à protocole de commande de transmission, TCP, d'équilibrage de charge (120) comportant un élément de mémoire (124) configuré pour mémoriser des données, un processeur (126) exploitable pour exécuter des instructions associées aux données, et un module XFS (122) configuré pour:
recevoir à partir d'un client un message destiné à un serveur Web;
incorporer, dans le message reçu, une valeur de source acheminée vers X, XFS, identifiant le client, la valeur XFS comportant au moins un d'une adresse IP source du client et d'un désignateur de port source associé au client; et
acheminer le message reçu comprenant la valeur XFS incorporée jusqu'au serveur Web;
et un serveur Web (130) configuré pour :
recevoir le message comportant la valeur XFS incorporée;
récupérer la valeur XFS à partir du message reçu; et
stocker la valeur XFS récupérée dans un noyau du serveur Web en vue de son utilisation par un programme d'application exécuté sur le serveur Web.

7. Système selon la revendication 6, dans lequel le message est un message d'accusé de réception, ACK, d'un établissement de liaison à trois voies du TCP.

8. Système selon la revendication 6, dans lequel le message reçu est envoyé en réponse à un message de synchronisation-accusé de réception, SYN-ACK, du TCP reçu par le client à partir du serveur.

9. Système selon la revendication 6, dans lequel la valeur XFS est incorporée dans un en-tête de TCP du message.
